# EUROPEAN PATENT SPECIFICATION

(11) **EP 4 282 265 B1**
(45) Date of publication and mention of the grant of the patent: **25.12.2024**
(21) Application number: 23168704.7
(22) Date of filing: 19.04.2023
(51) Int. Cl.: A01M 7/00, A01M 21/04, B08B 11/02, B08B 3/02

(54) **CROP SPRAYER COMPRISING A SYSTEM FOR STORING GLOVES AND CORRESPONDING METHOD**
FELDSPRITZE MIT EINEM SYSTEM ZUR AUFBEWAHRUNG VON HANDSCHUHEN UND ENTSPRECHENDES VERFAHREN
PULVÉRISATEUR DE CULTURE COMPRENANT UN SYSTÈME DE RANGEMENT DE GANTS ET PROCÉDÉ CORRESPONDANT

(30) Priority: 26.05.2022 US 202263365336 P
(43) Date of publication of application: 29.11.2023
(73) Proprietor: Agco Corporation, Duluth, Georgia 30096 (US)
(72) Inventor: Anderson, Joseph, Hesston (US); SNYDER, Todd Brandon, Hesston, 67062-0969 (US); Slawson, James McGrath, Hesston (US)
(74) Representative: AGCO Intellectual Property Department

(56) References cited:
- EP-B1- 3 095 326
- WO-A1-2020/078562
- GB-A- 2 352 383
- US-A- 6 053 427
- AMAZONE: "Amazone UF 2002 mounted sprayer", INTERNET CITATION, 26 October 2017 (2017-10-26), pages 1 - 44, XP002788632, Retrieved from the Internet <URL:https://info.amazone.de/DisplayInfo.aspx?id=46203> [retrieved on 20190205]

## Description

### FIELD

Embodiments of the present invention relate generally to systems and methods for storing personal protective equipment, particularly gloves, on an agricultural crop sprayer when not in use, while avoiding contamination.

### BACKGROUND

Sprayer operators often wear gloves (known in the art as a type of personal protective equipment or PPE) when loading their sprayer with chemicals to protect themselves from getting chemicals directly on their skin. The operator then has to remove the gloves and put them in a storage box somewhere on the outside of the vehicle because the gloves cannot simply be left behind, should not be stored in the cab, and may need to be reused later. Removing contaminated gloves without handling them with bare hands can be difficult, and once the gloves have been removed and placed in the storage box, the storage box has to be closed with a bare hand, potentially contaminating the operator. GB2352383A discloses a spraying apparatus comprising a storage box for gloves or other things according to the preamble of claim 1.

### BRIEF SUMMARY

In an aspect of the invention, there is provided an agricultural crop sprayer according to claim 1. Further optional features of the agricultural crop sprayer are set out in the claims dependent on claim 1.

In another aspect of the invention, there is provided a method according to claim 12. Further optional features of the method are set out in the claims dependent on claim 12.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified cross-sectional view illustrating a system for storing gloves;
FIG. 2 is another simplified view of the system shown in FIG. 1;
FIG. 3 illustrates an agricultural vehicle in the form of a self-propelled crop sprayer, which includes the system shown in FIG. 1; and
FIG. 4 illustrates a trailer carrying the system shown in FIG. 1.

### DETAILED DESCRIPTION

The illustrations presented herein are not actual views of any particular system or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

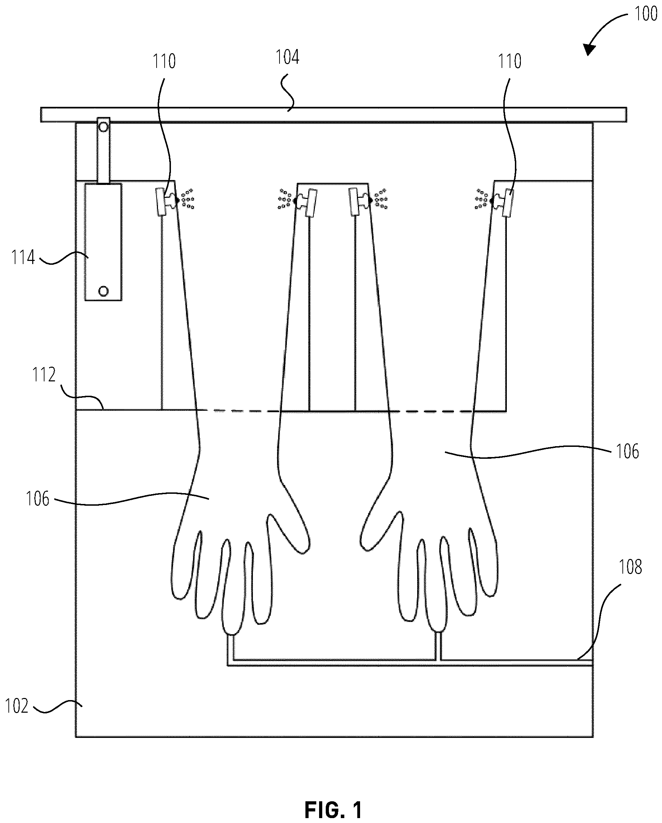

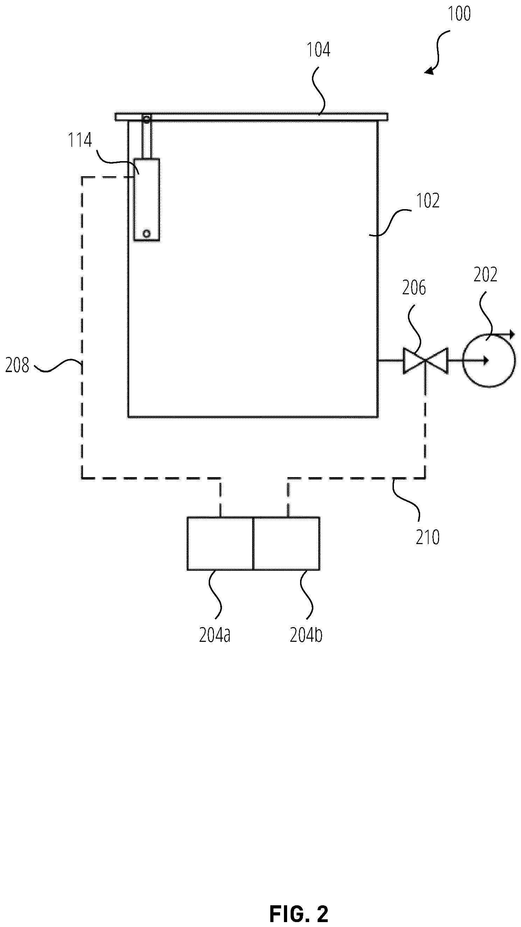

FIG. 1 is a simplified cross-sectional view of a system 100 for storing gloves. FIG. 2 is a simplified view of the system 100 including external components. The system 100 includes a storage box 102 and a lid 104. The storage box 102 defines an internal cavity 106 shaped to receive gloves (typically a pair of gloves, but may be a single glove or multiple pairs of gloves). The internal cavity 106 can be used to assist a user in removing the gloves without contaminating the user's hands.

In particular, the internal cavity 106 can be connected at one or more points to a vacuum line 108, which is in turn connected to a vacuum source 202 (FIG. 2). To remove gloves, the user inserts gloved hands (*i*.*e*., hands covered by the gloves) into the internal cavity 106, and the vacuum source 202 applies a vacuum to hold the gloves in place. The user can then simply withdraw his or her hands from the gloves, which stay in the internal cavity. The user need not touch the exterior of the gloves with his or her hands.

The system 100 may also include one or more spray nozzles 110 configured to wash the exterior of the gloves as the gloves enter and/or leave the internal cavity 106. The spray nozzles 110 may be connected to a rinsate line 112 to receive a rinsate (*e*.*g*., water, alcohol, a surfactant, *etc.*)*.* Though two spray nozzles 110 are depicted for each glove, any number of spray nozzles 110 may be used.

The lid 104 may be configured to be opened by an actuator 114 (*e.g.*, by pivoting the lid 104 on a hinge, sliding the lid 104, *etc.*)*.* The actuator 114 may be an electrical, mechanical, or pneumatic actuator controlled by a hands-free switch 204a (FIG. 2).

The system 100 may include one or more hands-free switches 204a, 204a to operate parts of the system. For example, one hands-free switch 204a may operate the actuator 114 to open the lid 104, and another hands-free switch 204a may operate a valve 206 connecting the vacuum lines 108 to the vacuum source 202. In another embodiment, one hands-free switch 204a may operate both the actuator 114 and the valve 206. Another hands-free switch 204b may operate only the actuator 114. In this embodiment, the user would activate the first hands-free switch 204a to remove gloves, and would activate the second hands-free switch 204a to put gloves on. The hands-free switches 204a, hands-free switch 204a may be, for example, a foot switch, a sensor (*e*.*g*., a motion sensor, a voice-activated sensor, *etc.*), or any other type of switch. In some embodiments, one hands-free switch 204a may be activated to open the lid 104 and connect the vacuum source 202, and after the hands are removed from the gloves in the internal cavity 106, the same hands-free switch 204a may be activated again to close the lid 104 and turn off the valve 206 to the vacuum source 202. That is, the hands-free switches 204a, 204b may be on/off toggle switches. In other embodiments, the hands-free switches 204a, 204b may be deadman switches that turn off when pressure (*e*.*g*., from the user's foot) is removed. The hands-free switches 204a, 204a may be configured in any selected manner to enable the user to operate the system 100 without contaminating exterior surfaces or the user's own body or clothing.

In some embodiments, the flow of rinsate to the spray nozzles 110 may be controlled simultaneously with the vacuum, such that when the gloves are being inserted into the internal cavity 106, the rinsate washes the gloves and flows from the internal cavity 106 through the vacuum lines 108.

The vacuum source 202 is pictured in FIG. 2 as a vacuum pump, which may be electrically or pneumatically driven. Alternatively, the vacuum source 202 may be an air-powered venturi or any other vacuum source.

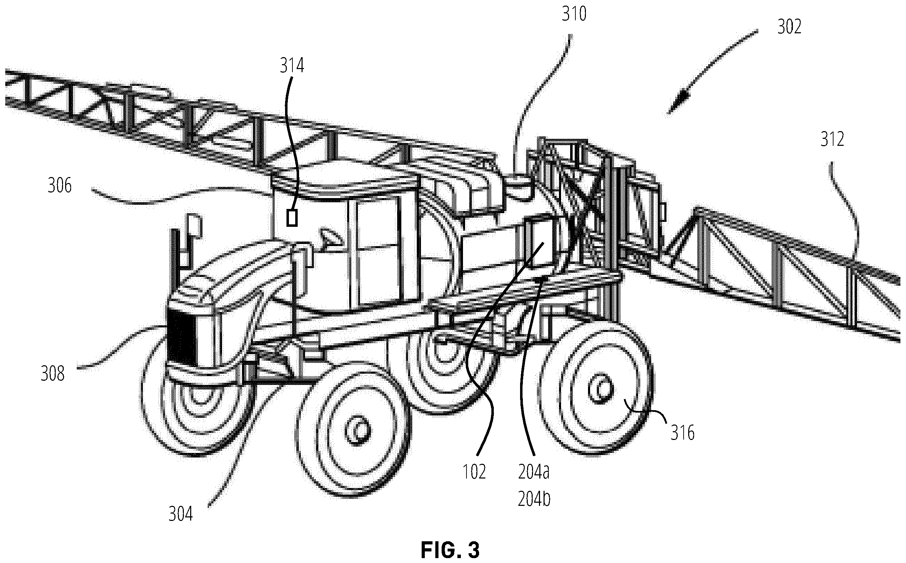

FIG. 3 shows a crop sprayer 302 used to deliver chemicals, such as an herbicide, to crops in an agricultural field. The crop sprayer 302 includes a chassis 304 and an operator cab 306 mounted on the chassis 304. The chassis 304 is supported by wheels 316 or other ground-engaging elements (*e*.*g*., endless tracks). The operator cab 306 may house controls for the crop sprayer 302. An engine 308 may be mounted on a forward portion of chassis 304 in front of the operator cab 306 or may be mounted on a rearward portion of the chassis 304 behind the operator cab 306. The engine 308 may be commercially available from a variety of sources and may include, for example, a diesel engine or a gasoline-powered internal-combustion engine, a battery-powered electric motor, *etc.* The engine 308 provides energy to propel the crop sprayer 302 through a field on wheels 316 or tracks, and may also provide energy to spray liquids from the crop sprayer 302.

The crop sprayer 302 further includes a product tank 310 to store a liquid to be sprayed on the field. The liquid may include chemicals, such as but not limited to, herbicides, pesticides, and/or fertilizers. The product tank 310 may be mounted on the chassis 304, either in front of or behind the operator cab 306. The crop sprayer 302 may include more than one product tank 310 to store different chemicals to be sprayed on the field. The stored chemicals may be dispersed by the crop sprayer 302 one at a time, or different chemicals may be mixed and dispersed together in a variety of mixtures.

A boom 312 on the crop sprayer 302 is used to distribute the liquid from the product tank 310 over a wide swath as the crop sprayer 302 is driven through the field. The outer ends of the boom 312 are omitted from view in FIG. 3 to better show detail of the body of the crop sprayer 302. Booms are generally known in the art, and are described, for example, in U.S. Patent Application Publication 2013/0248619 A1, "Applicator Boom Tilt Frame," published September 26, 2013. The boom 312 may include two or more portions that can fold for transport on public roadways, and unfold (*i*.*e*., to the position shown in FIG. 3) for field operations.

The crop sprayer 302 may include a controller 314 configured to control operations of the crop sprayer 302. For example, the controller 314 may be entirely or partially located within the operator cab 306. The controller 314 may include a user interface (e.g., a keyboard, a joystick, a display, a touchscreen, *etc*.) to enable a user to interact with and direct the controller 314 to control the crop sprayer 302.

The crop sprayer 302 may include the system 100 shown in FIG. 1 and FIG. 2 and described above. For example, the storage box 102 may be mounted to a rail above a platform of the crop sprayer 302, and the hands-free switches 204a, 204b may be mounted at platform-floor level below the storage box 102. The operator of the crop sprayer 302, while standing on the platform, may open the storage box 102 with the hands-free switch 204b, put on the gloves as described above, and then perform tasks related to use of the crop sprayer 302, such as filling the product tank 310, adjusting spray nozzles, etc. Once the tasks are complete, the operator can open the storage box 102 again with the hands-free switch 204a, remove the gloves as described above, and then enter the operator cab 306 with clean hands. The system 100 may help the operator to avoid contamination of the operator cab 306 and provide a convenient place to store the gloves when they are not in use. In another embodiment, the storage box 102 may be mounted at a level such that the operator can insert and remove the gloves while standing on the ground.

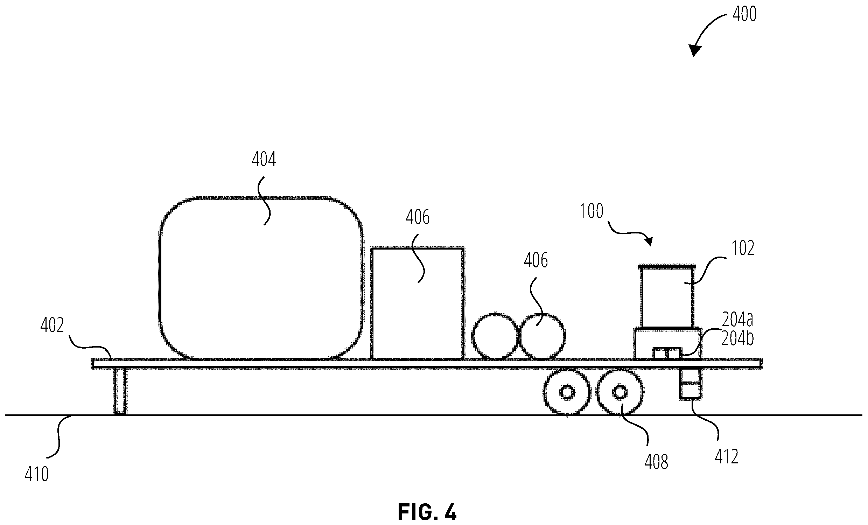

FIG. 4 is a simplified side view of a trailer 400 carrying the system 100 described above. The trailer 400 includes a chassis 402 supported by wheels 408 over the ground surface 410. The trailer 400 is configured to be towed by a towing vehicle or parked, as known in the art. The chassis 402 may have a flat bed, as shown, or any other bed type. The chassis 402 may carry a tank 404 containing fluid, or any other cargo 406. The chassis 402 may have steps 412 attached thereto to enable a person wearing protective gloves to easily climb upon the chassis 402. Thus, a person may climb the steps 412, activate the hands-free switch 204a, and remove the gloves as described above, without contaminating hands, clothing, or other surfaces. The gloves may remain in the storage box 102 until they are needed again, at which time the person activates the hands-free switch 204b and puts the gloves on.

## Claims

1. An agricultural crop sprayer (302; 400), comprising:
a chassis (304; 402) supported by a plurality of ground-engaging elements (316; 408);
a sprayer system comprising a boom (312) and a plurality of nozzles spaced along the boom, the nozzles directed to spray liquid at a ground surface; and
a system (100) carried by the chassis and configured for storing gloves, the system comprising:
a storage box (102) defining an internal cavity (106) shaped to receive gloves;
a lid (104) configured to cover the internal cavity; **characterised in that** the system further comprises
a vacuum source (202) configured to retain the gloves in the internal cavity when hands are removed from the gloves.

2. The crop sprayer (302; 400) of claim 1, further comprising an actuator (114) configured to open the lid (104).

3. The crop sprayer (302; 400) of claim 2, further comprising a hands-free switch (204a, 204b) configured to operate the actuator (114) to open the lid (104).

4. The crop sprayer (302; 400) of claim 3, wherein the hands-free switch (204a, 204b) comprises a foot switch.

5. The crop sprayer (302; 400) of claim 3, wherein the hands-free switch (204a, 204b) comprises a sensor.

6. The crop sprayer (302; 400) of any one of claims 3 to 5, wherein the hands-free switch (204a) is further configured to apply vacuum from the vacuum source (202) to the internal cavity (106).

7. The crop sprayer (302; 400) of any one of claims 1 to 6, wherein the storage box (102) contains at least one spray nozzle (110) configured to wash the gloves as the gloves enter the internal cavity (106).

8. The crop sprayer (302; 400) of any one of claims 1 to 7, wherein the vacuum source (202) is selected from the group consisting of a vacuum pump and an air-powered venturi.

9. The crop sprayer (400) of any one of claims 1 to 8, wherein the chassis (402) comprises a trailer chassis.

10. The crop sprayer (302) of any one of claims 1 to 8, wherein the chassis (304) carries:
an operator cab (306); and
an engine (308) configured to drive at least some of the ground-engaging elements (316).

11. The crop sprayer (302; 400) of any one of claims 1 to 10, further comprising a platform, wherein the storage box is mounted above the platform such that an operator standing on the platform can insert hands into the gloves within the internal cavity.

12. A method, comprising:
opening a lid (104) covering a storage box (102) carried by a chassis (304; 402) of a crop sprayer (302; 400), the storage box defining an internal cavity (106) shaped to receive gloves;
inserting hands covered by the gloves into the internal cavity; and
applying a vacuum from a vacuum source (202) to the internal cavity to remove the gloves from the hands.

13. The method of claim 12, wherein at least one of opening the lid (104) and applying the vacuum comprises activating a hands-free switch (204a, 204b).

14. The method of claim 12 or 13, further comprising washing an exterior surface of the gloves within the internal cavity (106).

15. The method of any one of claims 12 to 14, wherein applying the vacuum from the vacuum source (202) to the internal cavity (106) comprises retaining the gloves within the internal cavity as the hands are removed from the gloves.

16. The method of any one of claims 12 to 15, further comprising:
reopening the lid (104);
reinserting the hands into the gloves; and
removing the hands covered by the gloves from the internal cavity (106).

## Patentansprüche

1. Landwirtschaftliche Feldspritze (302; 400) mit:
einem Chassis (304; 402), das durch eine Mehrzahl von am Boden angreifenden Elementen (316; 408) abgestützt ist;
einem Spritzensystem mit einem Ausleger (312) und einer Mehrzahl von Düsen, die entlang des Auslegers beabstandet sind, wobei die Düsen ausgerichtet sind, um Flüssigkeit auf eine Bodenoberfläche zu spritzen; und
einem System (100), das von dem Chassis getragen wird und zum Aufbewahren von Handschuhen ausgebildet ist, wobei das System aufweist:
eine Aufbewahrungsbox (102), die eine interne Kavität (106) definiert, die geformt ist, um Handschuhe aufzunehmen;
einen Deckel (104), der ausgebildet ist, um die interne Kavität abzudecken; **dadurch gekennzeichnet, dass** das System weiterhin
eine Vakuumquelle (202) aufweist, die ausgebildet ist, um die Handschuhe in der internen Kavität zurückzuhalten, wenn Hände aus den Handschuhen entfernt werden.

2. Feldspritze (302; 400) nach Anspruch 1, weiterhin mit einem Aktor (114), der ausgebildet ist, um den Deckel (104) zu öffnen.

3. Feldspritze (302; 400) nach Anspruch 2, weiterhin mit einem Freihandschalter (204a, 204b), der ausgebildet ist, um den Aktor (114) zu betätigen, um den Deckel (104) zu öffnen.

4. Feldspritze (302; 400) nach Anspruch 3, wobei der Freihandschalter (204a, 204b) einen Fußschalter aufweist.

5. Feldspritze (302; 400) nach Anspruch 3, wobei der berührungslose Schalter (204a, 204b) einen Sensor aufweist.

6. Feldspritze (302; 400) nach einem der Ansprüche 3 bis 5, wobei der Freihandschalter (204a) weiterhin ausgebildet ist, um die interne Kavität (106) mit Vakuum von der Vakuumquelle (202) zu beaufschlagen.

7. Feldspritze (302; 400) nach einem der Ansprüche 1 bis 6, wobei die Aufbewahrungsbox (102) mindestens eine Spritzdüse (110) enthält, die ausgebildet ist, um die Handschuhe zu waschen, wenn die Handschuhe in die interne Kavität (106) eintreten.

8. Feldspritze (302; 400) nach einem der Ansprüche 1 bis 7, wobei die Vakuumquelle (202) eine Vakuumpumpe und/oder eine druckluftbetriebene Venturi-Pumpe ist.

9. Feldspritze (400) nach einem der Ansprüche 1 bis 8, wobei das Chassis (402) ein Anhängerchassis aufweist.

10. Feldspritze (302) nach einem der Ansprüche 1 bis 8, wobei das Chassis (304):
eine Bedienerkabine (306); und
einen Motor (308), der ausgebildet ist, um mindestens einige der am Boden angreifenden Elemente (316) anzutreiben,
trägt.

11. Feldspritze (302; 400) nach einem der Ansprüche 1 bis 10, weiterhin mit einer Plattform, wobei die Aufbewahrungsbox derart oberhalb der Plattform angeordnet ist, dass ein auf der Plattform stehender Bediener Hände in die Handschuhe in der internen Kavität einführen kann.

12. Verfahren mit:
Öffnen eines Deckels (104), der eine von einem Chassis (304; 402) einer Feldspritze (302; 400) getragene Aufbewahrungsbox (102) abdeckt, wobei die Aufbewahrungsbox eine interne Kavität (106) definiert, die zum Aufnehmen von Handschuhen geformt ist;
Einführen von durch die Handschuhe bedeckten Händen in die interne Kavität; und
Beaufschlagen der internen Kavität mit einem Vakuum von einer Vakuumquelle (202), um die Handschuhe von den Händen zu entfernen.

13. Verfahren nach Anspruch 12, wobei das Öffnen des Deckels (104) und/oder das Beaufschlagen mit dem Vakuum ein Aktivieren eines Freihandschalters (204a, 204b) aufweist.

14. Verfahren nach Anspruch 12 oder 13, weiterhin mit Waschen einer externen Oberfläche der Handschuhe in der internen Kavität (106).

15. Verfahren nach einem der Ansprüche 12 bis 14, wobei das Beaufschlagen der internen Kavität (106) mit dem Vakuum von der Vakuumquelle (202) ein Zurückhalten der Handschuhe in der internen Kavität aufweist, wenn die Hände aus den Handschuhen entfernt werden.

16. Verfahren nach einem der Ansprüche 12 bis 15, weiterhin mit:
Wiederöffnen des Deckels (104);
Wiedereinführen der Hände in die Handschuhe; und
Entfernen der von den Handschuhen bedeckten Händen aus der internen Kavität (106).

## Revendications

1. Pulvérisateur de culture agricole (302 ; 400), comprenant :
un châssis (304 ; 402) supporté par une pluralité d'éléments de couplage au sol (316 ; 408) ;
un dispositif de pulvérisation comprenant une perche (312) et une pluralité d'injecteurs espacés le long de la perche,
les injecteurs étant dirigés de manière à pulvériser un liquide sur une surface du sol ; et
un dispositif (100) supporté par le châssis et configuré de manière à stocker des gants, le dispositif comprenant :
une boîte de stockage (102) définissant une cavité interne (106) formée de manière à recevoir des gants ;
un couvercle (104) configuré de manière à recouvrir la cavité interne ; **caractérisé en ce que** le dispositif comprend, en outre :
une source de vide (202) configurée de manière à maintenir les gants dans la cavité interne lorsque les mains sont retirées des gants.

2. Pulvérisateur de culture (302 ; 400) selon la revendication 1, comprenant, en outre, un actionneur (114) configuré de manière à ouvrir le couvercle (104).

3. Pulvérisateur de culture (302 ; 400) selon la revendication 2, comprenant, en outre, un commutateur à mains libres (204a, 204b) configuré de manière à commander l'actionneur (114) afin d'ouvrir le couvercle (104).

4. Pulvérisateur de culture (302 ; 400) selon la revendication 3, dans lequel le commutateur à mains libres (204a, 204b) comprend un commutateur à pied.

5. Pulvérisateur de culture (302 ; 400) selon la revendication 3, dans lequel le commutateur à mains libres (204a, 204b) comprend un détecteur.

6. Pulvérisateur de culture (302 ; 400) selon l'une quelconque des revendications 3 à 5, dans lequel le commutateur à mains libres (204a) est, en outre, configuré de manière à appliquer le vide à partir de la source de vide (202) dans la cavité interne (106).

7. Pulvérisateur de culture (302 ; 400) selon l'une quelconque des revendications 1 à 6, dans lequel la boîte de stockage (102) contient au moins un injecteur de pulvérisation (110) configuré de manière à laver les gants lorsque les gants entrent dans la cavité interne (106).

8. Pulvérisateur de culture (302 ; 400) selon l'une quelconque des revendications 1 à 7, dans lequel la source de vide (202) est sélectionnée à partir du groupe constitué par une pompe à vide et un venturi pneumatique.

9. Pulvérisateur de culture (400) selon l'une quelconque des revendications 1 à 8, dans lequel le châssis (402) comprend un châssis de remorque.

10. Pulvérisateur de culture (302) selon l'une quelconque des revendications 1 à 8, dans lequel le châssis (304) supporte :
une cabine d'opérateur (306) ; et
un moteur (308) configuré de manière à entraîner au moins certains des éléments de couplage au sol (316).

11. Pulvérisateur de culture (302; 400) selon l'une quelconque des revendications 1 à 10, comprenant, en outre, une plate-forme, dans lequel la boîte de stockage est montée au-dessus de la plate-forme de telle sorte qu'un opérateur debout sur la plate-forme peut insérer les mains dans les gants à l'intérieur de la cavité interne.

12. Procédé, comprenant :
l'ouverture d'un couvercle (104) recouvrant une boîte de stockage (102) supportée par un châssis (304 ; 402) d'un pulvérisateur de culture (302 ; 400), la boîte de stockage définissant une cavité interne (106) formée de manière à recevoir des gants ;
l'insertion de mains recouvertes par les gants dans la cavité interne ; et
l'application d'un vide à partir d'une source de vide (202) dans la cavité interne afin de retirer les gants des mains.

13. Procédé selon la revendication 12, dans lequel au moins l'un de l'ouverture du couvercle (104) et de l'application du vide comprend l'activation d'un commutateur à mains libres (204a, 204b).

14. Procédé selon la revendication 12 ou 13, comprenant, en outre, le lavage d'une surface externe des gants à l'intérieur de la cavité interne (106).

15. Procédé selon l'une quelconque des revendications 12 à 14, dans lequel l'application du vide à partir de la source de vide (202) vers la cavité interne (106) comprend la retenue des gants à l'intérieur de la cavité interne pendant que les mains sont retirées des gants.

16. Procédé selon l'une quelconque des revendications 12 à 15, comprenant, en outre :
la réouverture du couvercle (104) ;
la réinsertion des mains dans les gants ; et
le retrait des mains recouvertes par les gants de la cavité interne (106).
